# EUROPEAN PATENT APPLICATION

(11) **EP 3 693 312 A1**
(43) Date of publication of application: **12.08.2020**
(21) Application number: 19194757.1
(22) Date of filing: 30.08.2019
(51) Int. Cl.: B66B 5/00

(54) **ELEVATOR SYSTEM COMPONENT ANALYSIS**

(30) Priority: 27.09.2018 IN 201811036436
(71) Applicant: Otis Elevator Company, Farmington, Connecticut 06032 (US)
(72) Inventor: THIRUMALASETTI, Anil, 500081 Hitech City (IN); HAMEED, Syed Abdul, 500081 Hitech City (IN); HOLEY, Gaurav, 500081 Hitech City (IN)
(74) Representative: Dehns

(57) **Abstract**

Methods and systems for elevator component analysis are provided. Aspects includes receiving, by a processor, an elevator component template for an elevator system, wherein the elevator component template comprises reference image data associated with one or more locations in the elevator system, receiving, from a camera (304), image data associated with at least one of the one or more locations in the elevator system, comparing the image data to the reference image data to determine a fault in an elevator component (330) in the elevator system, and displaying, by a display, the fault in the elevator component in the elevator system.

## Description

### BACKGROUND

The subject matter disclosed herein generally relates to elevator systems and, more particularly, to a method and system for identifying faults in an electrical system for an elevator system.

Typically, installation of elevator machinery and electrical systems is complex for a field engineer because of the potential for mistakes and thus, troubleshooting issues. Improper installation activity can result in safety issues within an elevator system as well as performance issues. Improper installation activities can include errors in wiring the electrical system or simply faulty components being installed. Troubleshooting these improper installation activities can result in an increase in project costs and installation time.

### BRIEF DESCRIPTION

According to one embodiment, a method for elevator component analysis is provided. The method includes receiving, by a processor, an elevator component template for an elevator system, wherein the elevator component template comprises reference image data associated with one or more locations in the elevator system, receiving, from a camera, image data associated with at least one of the one or more locations in the elevator system, comparing the image data to the reference image data to determine a fault in an elevator component in the elevator system, and displaying, by a display, the fault in the elevator component in the elevator system.

In addition to one or more of the features described above, further embodiments of the method may include that the determining the fault in the elevator component in the elevator system comprises analyzing a feature vector, generated by a machine learning model, the feature vector comprising one or more features extracted from the image data.

In addition to one or more of the features described above, or as an alternative, further embodiments of the method may include initiating a workflow for a technician based at least in part on the fault.

In addition to one or more of the features described above, or as an alternative, further embodiments of the method may include that displaying the fault in the elevator component comprises overlaying an indicia for a potential cause of the fault in the elevator component on the image data.

In addition to one or more of the features described above, or as an alternative, further embodiments of the method may include comparing the image data to the reference image data to determine a need for an adjustment of one or more characteristics of the camera.

In addition to one or more of the features described above, or as an alternative, further embodiments of the method may include that the one or more characteristics comprises a zoom adjustment, a position adjustment, and a tilt adjustment.

According to one embodiment, a system for component analysis is provided. The system includes a processor communicatively coupled to a memory, the processor configured to receive an elevator component template for an elevator system, wherein the elevator component template comprises reference image data associated with one or more locations in the elevator system, receive, from a camera, image data associated with at least one of the one or more locations in the elevator system, compare the image data to the reference image data to determine a fault in an elevator component in the elevator system, and display, by a display, the fault in the elevator component in the elevator system.

In addition to one or more of the features described above, further embodiments of the system may include that the determining the fault in the elevator component in the elevator system comprises analyzing a feature vector, generated by a machine learning model, the feature vector comprising one or more features extracted from the image data.

In addition to one or more of the features described above, or as an alternative, further embodiments of the system may include that the processor is further configured to initiate a workflow for a technician based at least in part on the fault.

In addition to one or more of the features described above, or as an alternative, further embodiments of the system may include that displaying the fault in the elevator component comprises overlaying an indicia for a potential cause of the fault in the elevator component on the image data.

In addition to one or more of the features described above, or as an alternative, further embodiments of the system may include that the processor is further configured to compare the image data to the reference image data to determine a need for an adjustment of one or more characteristics of the camera.

In addition to one or more of the features described above, or as an alternative, further embodiments of the system may include that the one or more characteristics comprises a zoom adjustment, a position adjustment, and a tilt adjustment.

In addition to one or more of the features described above, or as an alternative, further embodiments of the system may include that the camera is in electronic communication with a user device.

According to one embodiment, a system for identifying an electrical breakage in an elevator system is provided. The system includes a signal generator, a one or more sensors located at one or more locations in an electrical system of the elevator system, the one or more sensors operable to sense electrical signals in the elevator system, and a controller coupled to a memory, wherein the controller is configured to operate the signal generator to transmit a modulated signal through the electrical system of the elevator system, communicate with the one or more sensors to identify whether the one or more sensors received the modulated signal, and identify an electrical breakage location based on a determination of a first sensor having received the modulated signal and a second sensor that having not received the modulated signal, wherein the second sensor is in a closest proximity to the first sensor.

In addition to one or more of the features described above, further embodiments of the system may include that the electrical breakage location is at an electrical connection between the first sensor and the second sensor.

In addition to one or more of the features described above, or as an alternative, further embodiments of the system may include that the controller is further configured to map each of the one or more sensors to a location in the electrical system.

In addition to one or more of the features described above, or as an alternative, further embodiments of the system may include that the modulated signal comprises an electronic signal having a known frequency.

In addition to one or more of the features described above, or as an alternative, further embodiments of the system may include that the controller is further configured to transmit the known frequency of the modulated signal to the one or more sensors.

In addition to one or more of the features described above, or as an alternative, further embodiments of the system may include that the one or more sensors comprise a transceiver configured to transmit an indicia of detection of the modulated signal.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the disclosure;
FIG. 2 depicts a block diagram of a computer system for use in implementing one or more embodiments of the disclosure;
FIG. 3 depicts a system for elevator component analysis according to one or more embodiments;
FIG. 4 depicts a diagram of a system for identifying electrical breakages in an elevator system according to one or more embodiments; and
FIG. 5 depicts a flow diagram of a method for elevator component analysis according to one or more embodiments.

### DETAILED DESCRIPTION

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in FIG. X may be labeled "Xa" and a similar feature in FIG. Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

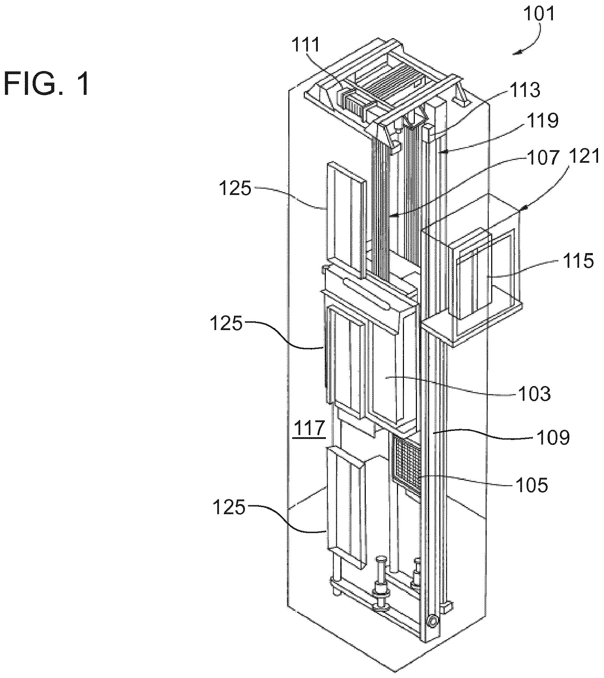

FIG. 1 is a perspective view of an elevator system 101 including an elevator car 103, a counterweight 105, a roping 107, a guide rail 109, a machine 111, a position encoder 113, and a controller 115. The elevator car 103 and counterweight 105 are connected to each other by the roping 107. The roping 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The roping 107 engages the machine 111, which is part of an overhead structure of the elevator system 101. The machine 111 is configured to control movement between the elevator car 103 and the counterweight 105. The position encoder 113 may be mounted on an upper sheave of a speed-governor system 119 and may be configured to provide position signals related to a position of the elevator car 103 within the elevator shaft 117. In other embodiments, the position encoder 113 may be directly mounted to a moving component of the machine 111, or may be located in other positions and/or configurations as known in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position encoder 113. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor.

Although shown and described with a roping system, elevator systems that employ other methods and mechanisms of moving an elevator car within an elevator shaft, such as hydraulic and/or ropeless elevators, may employ embodiments of the present disclosure. FIG. 1 is merely a non-limiting example presented for illustrative and explanatory purposes.

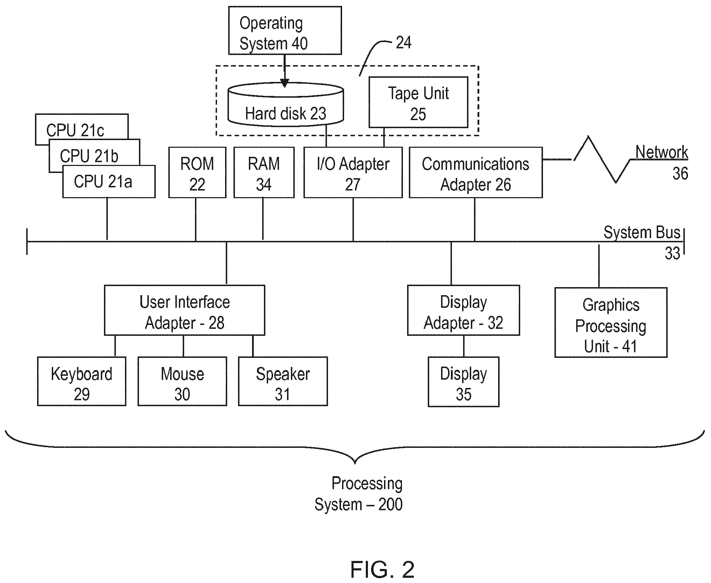

Referring to FIG. 2, there is shown an embodiment of a processing system 200 for implementing the teachings herein. In this embodiment, the system 200 has one or more central processing units (processors) 21a, 21b, 21c, etc. (collectively or generically referred to as processor(s) 21). In one or more embodiments, each processor 21 may include a reduced instruction set computer (RISC) microprocessor. Processors 21 are coupled to system memory 34 (RAM) and various other components via a system bus 33. Read only memory (ROM) 22 is coupled to the system bus 33 and may include a basic input/output system (BIOS), which controls certain basic functions of system 200.

FIG. 2 further depicts an input/output (I/O) adapter 27 and a network adapter 26 coupled to the system bus 33. I/O adapter 27 may be a small computer system interface (SCSI) adapter that communicates with a hard disk 23 and/or tape storage drive 25 or any other similar component. I/O adapter 27, hard disk 23, and tape storage device 25 are collectively referred to herein as mass storage 24. Operating system 40 for execution on the processing system 200 may be stored in mass storage 24. A network communications adapter 26 interconnects bus 33 with an outside network 36 enabling data processing system 200 to communicate with other such systems. A screen (e.g., a display monitor) 35 is connected to system bus 33 by display adaptor 32, which may include a graphics adapter to improve the performance of graphics intensive applications and a video controller. In one embodiment, adapters 27, 26, and 32 may be connected to one or more I/O busses that are connected to system bus 33 via an intermediate bus bridge (not shown). Suitable I/O buses for connecting peripheral devices such as hard disk controllers, network adapters, and graphics adapters typically include common protocols, such as the Peripheral Component Interconnect (PCI). Additional input/output devices are shown as connected to system bus 33 via user interface adapter 28 and display adapter 32. A keyboard 29, mouse 30, and speaker 31 all interconnected to bus 33 via user interface adapter 28, which may include, for example, a Super I/O chip integrating multiple device adapters into a single integrated circuit.

In exemplary embodiments, the processing system 200 includes a graphics processing unit 41. Graphics processing unit 41 is a specialized electronic circuit designed to manipulate and alter memory to accelerate the creation of images in a frame buffer intended for output to a display. In general, graphics processing unit 41 is very efficient at manipulating computer graphics and image processing and has a highly parallel structure that makes it more effective than general-purpose CPUs for algorithms where processing of large blocks of data is done in parallel. The processing system 200 described herein is merely exemplary and not intended to limit the application, uses, and/or technical scope of the present disclosure, which can be embodied in various forms known in the art.

Thus, as configured in FIG. 2, the system 200 includes processing capability in the form of processors 21, storage capability including system memory 34 and mass storage 24, input means such as keyboard 29 and mouse 30, and output capability including speaker 31 and display 35. In one embodiment, a portion of system memory 34 and mass storage 24 collectively store an operating system coordinate the functions of the various components shown in FIG. 2. FIG. 2 is merely a non-limiting example presented for illustrative and explanatory purposes.

Turning now to an overview of technologies that are more specifically relevant to aspects of the disclosure, in elevator systems, the electrical system traverses a large area from the machine room and power supply to the top and bottom of an elevator hoistway. Installation and maintenance operations can be difficult due to the size of this electrical system. There exists a need for an automated installation system and inspection process to assist field engineers with installation and maintenance operations.

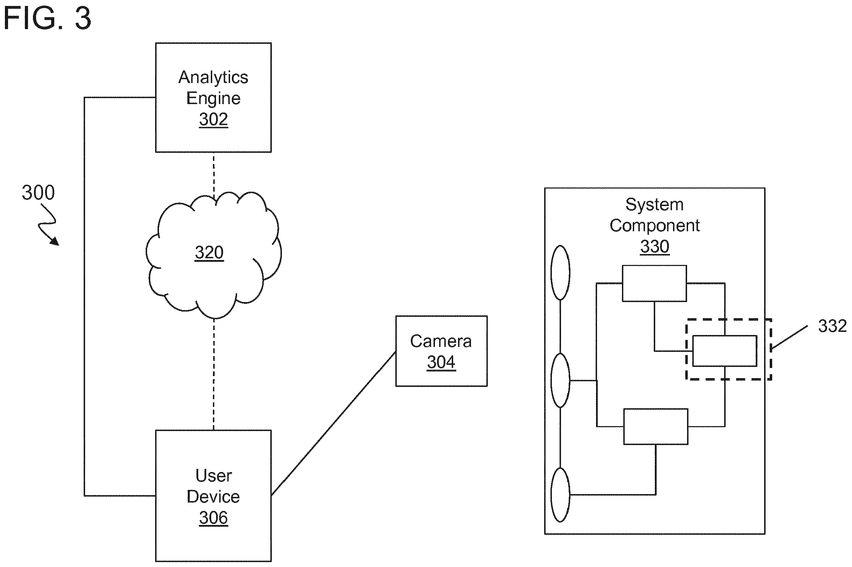

Turning now to a more detailed description of aspects of the present disclosure, FIG. 3 depicts a system for elevator component analysis according to one or more embodiments. The system 300 includes a camera 304 in electronic communication with a user device 306. In embodiments, the camera 304 can be embedded in the user device 306. For example, a smartphone camera, tablet camera, laptop camera, and the like can be utilized. In other embodiments, the camera 304 can be separate but in electronic communication with the user device 306. For example, a camera mounted to hat or to glasses can be utilized with the camera communicating with the user device. In one or more embodiments, the system 300 includes an analytics engine 302 that can be stored on a cloud server. The user device 306 can communicate through a network 320 with the analytics engine 302. In other embodiments, the analytics engine 302 can be stored locally on the user device 306. The user device 306 can be any type of computing device including, but not limited to, a smart phone, tablet computer, laptop computer, and smart watch.

In one or more embodiments, the system 300 can be utilized to troubleshoot maintenance issues within a system, such as an elevator electrical system. In addition, the system 300 can be utilized to verify that an installation of electronic components is done correctly. In embodiments, the user device 306 can obtain a system component template that includes reference image data for a variety of system components. This reference image data can be utilized as a comparison to the real time image data captured from the camera 304. In embodiments, a system component 330 can be part of a larger electrical or mechanical system, such as an elevator system. A field engineer can utilize the camera 304 to capture images of the system component. These component images can be compared to the reference images from the component template to determine if installation was performed correctly and/or if a maintenance issues exists at the system component 330.

In one or more embodiments, the analytics engine 302 can analyze the reference image and the real time image by obtaining stored images or video of system components for the elevator system from the component template. These images and/or video can be utilized as referenced images and compared to captured or real-time media from a technician to determine if a fault exists in the system. The technician can capture real-time images using a camera while on-site when performing an inspection or performing an installation. These real-time images can be compared against the reference images to determine if components of the elevator system are installed properly or if the components are in good working order. A fault can be determined in the system component 330 based on this comparison and the fault can be displayed on a display screen on the user device 306. The displayed fault can be a textual description of the fault or can be a displayed image of the fault along with an indication 332 of the location of the fault within the system component 330

In one or more embodiments, a comparison score can be obtained based on the changes between the images. This may be performed by comparing pixel values of elevator components in the new image and the reference image, or by any other known image comparison tool. A difference in pixel value for one component in the new image and the reference image indicates a change between the new image and the reference image. The absolute values of all the pixel differences between new image and the reference image may then be summed to generate a comparison score. The pixel comparisons may be made, for example, based on change in color, change in brightness, etc. Comparing pixel values is merely exemplary and not intended to limit the application, uses, and/or technical scope for image or video analytics, which can be embodied utilizing various techniques. The pixel comparison is a non-limiting example presented for illustrative and explanatory purposes.

In embodiments, the analytics engine (engine) 302 can also be implemented as so-called classifiers. In one or more embodiments, the features of the various engines/classifiers (302) described herein can be implemented on the processing system 200 shown in FIG. 2, or can be implemented on a neural network (not shown). In embodiments, the features of the engines/classifiers 302 can be implemented by configuring and arranging the processing system 200 to execute machine learning (ML) algorithms. In general, ML algorithms, in effect, extract features from received data (e.g., inputs to the engines 302) in order to "classify" the received data. The inputs, for example, can be the image data captured from the camera 304 as well as the reference image data taken from the component templates. Examples of suitable classifiers include but are not limited to neural networks (described in greater detail below), support vector machines (SVMs), logistic regression, decision trees, hidden Markov Models (HMMs), etc. The end result of the classifier's operations, i.e., the "classification," is to predict a class for the data. The ML algorithms apply machine learning techniques to the received data in order to, over time, create/train/update a unique "model." The learning or training performed by the engines/classifiers 302 can be supervised, unsupervised, or a hybrid that includes aspects of supervised and unsupervised learning. Supervised learning is when training data is already available and classified/labeled. Unsupervised learning is when training data is not classified/labeled so must be developed through iterations of the classifier. Unsupervised learning can utilize additional learning/training methods including, for example, clustering, anomaly detection, neural networks, deep learning, and the like.

In one or more embodiments, the analytics engine 302 can determine a cause of the fault in the system component 330. The analytics engine 302 can overlay an indication 332 on the real-time image to indicate a location where the fault exists based on the analysis and display the image with the indication 332 on the user device 306 display or any other display. The indication 332 can be an icon overlaid on the real time image or can be any indicia that draws attention to the faulty component such as, for example, a highlighted area or a box around the component.

According to one or more embodiments of the disclosure, the analytics engine 302 after analysis of the images can transmit a request for an image or video of system components located at a specified position in an elevator system. As the technician is capturing these images and video, this data is can be analyzed in real time either locally or in the cloud. The analytics engine 302 can transmit a request for an adjustment from the technician to better capture certain areas of the elevator equipment. This request can include an adjustment to the position, zoom, orientation, and the like, of the camera. The camera, itself, can be adjustable to pan, zoom, and focus on multiple locations and elevator components by the analytics engine 302.

In one or more embodiments, the camera 304 can be any type of camera that can be used to generate video and/or still frame images. The cameras can capture any type of video images such as, for example, infrared images, depth, image, and the like. The cameras can be wired or wireless cameras that can connect to the user device 306 through a wired or wireless network connection. The cameras mentioned herein are only examples of suitable camera types and are not intended to suggest any limitation as to the scope of use or functionality of the cameras.

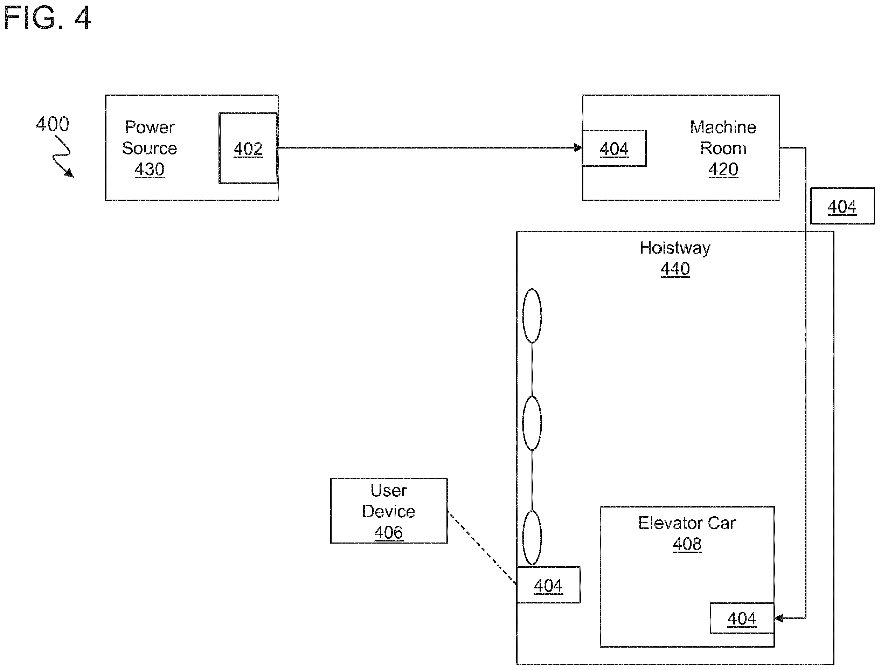

In one or more embodiments, a technician during installation or during a maintenance operation can troubleshoot any issues with an elevator electrical system. However, due to the size of the system, difficulties arise with attempting to trace the wiring to and from each and every electrical component throughout the system. Aspects of the disclosure provide a system that installs sensing nodes at critical junctures within the electrical system. FIG. 4 depicts a diagram of a system for identifying electrical breakages in an elevator system according to one or more embodiments. The system 400 includes an elevator system including a power source 430, a machine room 402, a hoistway 440 housing at least one elevator car 408. The power source 430 provides power to electrical components in the machine room 420, the elevator car 408, and the hoistway 440. The system 400 also includes sensing nodes 404 at critical junctures in the electrical system. These sensing nodes 404 are configured to detect electrical signals at various frequencies and transmit an indication of the detection of certain electrical signals to a user device 406 or to an elevator controller. To identify electrical breakages in the electrical system of the elevator, a signal generator 402 is utilized to transmit a modulated electronic signal with a known frequency through the electrical system. The sensing nodes 404 can have the known frequency of the signal pre-installed on the sensor or can have a user device 406, for example, transmit the known frequency to the sensing nodes 404 prior to sending the modulated signal. The signal generator 402 location is known to the system 400 and can be stored at any location within the electrical system of the elevator. In the illustrated example, the signal generator 402 is located at the power source 430. When the modulated signal is transmitted, the sensing nodes 404 can detect the signal and transmit an indication to the user device 406 or to an elevator controller. The user device 406 can determine a location of an electrical breakage between a sensing node that detects the signal and the closest sensing node that does not detect the modulated signal. This allows a technician to identify a location that would require re-wiring and/or new components within the electrical system. The critical junctures where the sensing nodes 404 are installed can be at various locations in the electrical system such as, for example, at or near fuse boxes, at control panels, and the like. The critical junctures for the sensing nodes 404 can be installed to optimize the coverage for the electrical system and for ease of access to a technician.

In one or more embodiments, a cloud computing system can be in wired or wireless electronic communication with one or all of the elements of the system 300 and system 400. Cloud computing can supplement, support or replace some or all of the functionality of the elements of the systems 300, 400. Additionally, some or all of the functionality of the elements of system 300, 400 can be implemented as a node of a cloud computing system. A cloud computing node is only one example of a suitable cloud computing node and is not intended to suggest any limitation as to the scope of use or functionality of embodiments described herein.

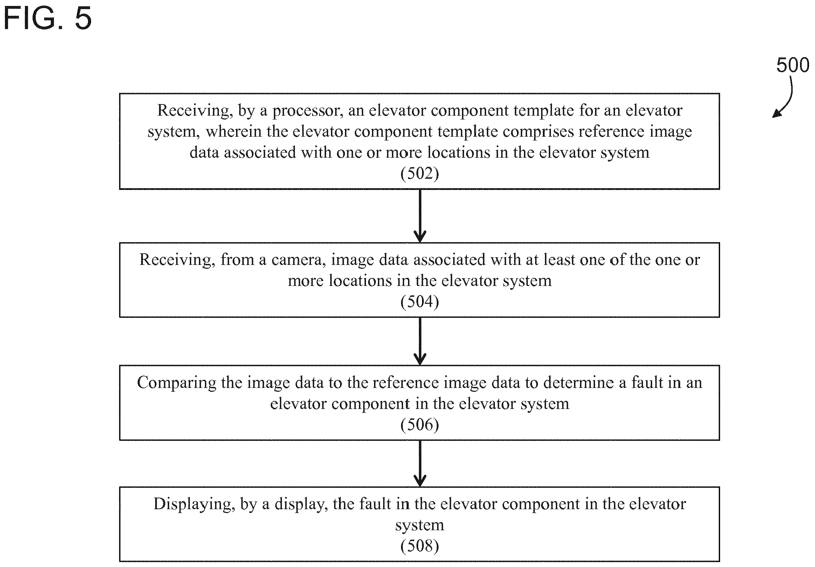

FIG. 5 depicts a flow diagram of a method for elevator component analysis according to one or more embodiments. The method 500 includes receiving, by a processor, an elevator component template for an elevator system, wherein the elevator component template comprises reference image data associated with one or more locations in the elevator system, as shown at block 502. At block 504, the method 500 includes receiving, from a camera, image data associated with at least one of the one or more locations in the elevator system. The method 500, at block 506, includes comparing the image data to the reference image data to determine a fault in an elevator component in the elevator system. And at block 508, the method 500 includes displaying, by a display, the fault in the elevator component in the elevator system.

Additional processes may also be included. It should be understood that the processes depicted in FIG. 5 represent illustrations and that other processes may be added or existing processes may be removed, modified, or rearranged without departing from the scope and spirit of the present disclosure.

A detailed description of one or more embodiments of the disclosed apparatus and method are presented herein by way of exemplification and not limitation with reference to the Figures.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A computer-implemented method for elevator component analysis, the method comprising:
receiving, by a processor, an elevator component template for an elevator system, wherein the elevator component template comprises reference image data associated with one or more locations in the elevator system;
receiving, from a camera, image data associated with at least one of the one or more locations in the elevator system;
comparing the image data to the reference image data to determine a fault in an elevator component in the elevator system; and
displaying, by a display, the fault in the elevator component in the elevator system.

2. The computer-implemented method of Claim 1, wherein the determining the fault in the elevator component in the elevator system comprises analyzing a feature vector, generated by a machine learning model, the feature vector comprising one or more features extracted from the image data.

3. The computer-implemented method of Claim 1 or 2, further comprising initiating a workflow for a technician based at least in part on the fault.

4. The computer-implemented method of any preceding Claim, wherein displaying the fault in the elevator component comprises overlaying an indicia for a potential cause of the fault in the elevator component on the image data.

5. The computer-implemented method of any preceding Claim, further comprising comparing the image data to the reference image data to determine a need for an adjustment of one or more characteristics of the camera.

6. The computer-implemented method of Claim 5, wherein the one or more characteristics comprises a zoom adjustment, a position adjustment, and a tilt adjustment.

7. The computer-implemented method of any preceding Claim, wherein the camera is in electronic communication with a user device.

8. A system for component analysis, the system comprising:
a processor communicatively coupled to a memory, the processor configured to:
receive an elevator component template for an elevator system, wherein the elevator component template comprises reference image data associated with one or more locations in the elevator system;
receive, from a camera, image data associated with at least one of the one or more locations in the elevator system;
compare the image data to the reference image data to determine a fault in an elevator component in the elevator system; and
display, by a display, the fault in the elevator component in the elevator system.

9. The system of Claim 8, wherein the determining the fault in the elevator component in the elevator system comprises analyzing a feature vector, generated by a machine learning model, the feature vector comprising one or more features extracted from the image data.

10. The system of Claim 8 or 9, wherein the processor is further configured to initiate a workflow for a technician based at least in part on the fault.

11. The system of Claim 8, 9 or 10, wherein displaying the fault in the elevator component comprises overlaying an indicia for a potential cause of the fault in the elevator component on the image data.

12. The system of any of Claims 8-11, wherein the processor is further configured to compare the image data to the reference image data to determine a need for an adjustment of one or more characteristics of the camera, and optionally
wherein the one or more characteristics comprises a zoom adjustment, a position adjustment, and a tilt adjustment.

13. The system of any of Claims 8-12, wherein the camera is in electronic communication with a user device.

14. A system for identifying an electrical breakage in an elevator system, the system comprising:
a signal generator;
a one or more sensors located at one or more locations in an electrical system of the elevator system, the one or more sensors operable to sense electrical signals in the elevator system;
a controller coupled to a memory, wherein the controller is configured to:
operate the signal generator to transmit a modulated signal through the electrical system of the elevator system;
communicate with the one or more sensors to identify whether the one or more sensors received the modulated signal;
identify an electrical breakage location based on a determination of a first sensor having received the modulated signal and a second sensor that having not received the modulated signal, wherein the second sensor is in a closest proximity to the first sensor.

15. The system of Claim 14, wherein the electrical breakage location is at an electrical connection between the first sensor and the second sensor; and/or
wherein the controller is further configured to map each of the one or more sensors to a location in the electrical system; and/or
wherein the modulated signal comprises an electronic signal having a known frequency, and optionally
wherein the controller is further configured to transmit the known frequency of the modulated signal to the one or more sensors; and/or
wherein the one or more sensors comprise a transceiver configured to transmit an indicia of detection of the modulated signal.
